Europäisches Patentamt

European Patent Office

Office européen des brevets

(11) Veröffentlichungsnummer: **0 059 253**

**A1**

(12) EUROPÄISCHE PATENTANMELDUNG

(21) Anmeldenummer: **81109144.6**

(22) Anmeldetag: **28.10.81**

(51) Int. Cl.³: **F 16 D 3/79**

(30) Priorität: **02.03.81 DE 3107848**

(43) Veröffentlichungstag der Anmeldung:
**08.09.82 Patentblatt 82/36**

(84) Benannte Vertragsstaaten:
**CH FR GB IT LI SE**

(71) Anmelder: SIEMENS AKTIENGESELLSCHAFT Berlin
und München
Postfach 22 02 61
D-8000 München 22(DE)

(72) Erfinder: Müller, Erwin, Ing. grad.
Engadiner Strasse 6
D-8000 München 71(DE)

(72) Erfinder: Robl, Josef
Herzogstandstrasse 31
D-8000 München 90(DE)

(54) Federscheibenkupplung.

(57) Die Federscheibenkupplung besitzt einen einheitlichen Grundaufbau mit an den Federscheiben (7, 8) befestigten Stellringbuchsen (3, 4), deren zentrale Bohrung (3a) einen einheitlichen Innendurchmesser (d1) aufweist. In Anpassung an den jeweiligen Durchmesser (d2) einer anzukuppelnden Welle sind in den Stellringbuchsen (3, 4) genau eingepaßte Einsatzbuchsen (14) mit wählbarem Innendurchmesser (d2) vorgesehen, welche mit radial in den Stellringbuchsen (3, 4) verlaufenden Druckschrauben (5) auf der eingesteckten Welle (1, 2) festgeklemmt werden können.

FIG 1

EP 0 059 253 A1

SIEMENS AKTIENGESELLSCHAFT          Unser Zeichen
Berlin und München                  VPA 81 P 6044 E

Federscheibenkupplung

Die Erfindung bezieht sich auf eine Federscheibenkupplung zur Verbindung zweier Wellenenden für winkelgetreue Übertragung von Drehbewegungen, mit zwei in einem stabilisierenden Käfig gehaltenen Federscheiben, wobei zwei Stellringbuchsen zur Aufnahme je eines Wellenendes an der bzw. an je einer Federscheibe befestigt sind.

Eine derartige Federscheibenkupplung ist beispielsweise aus dem DE-GM 1 988.828 bekannt. Solche Kupplungen werden insbesondere in der Steuer- und Regeltechnik als Verbindungselemente rotierender Wellen, etwa zwischen einem Drehmelder oder einem Motor und einem Getriebe, eingesetzt. Sie können einen montagebedingten Versatz der miteinander zu verbindenden Wellenenden ausgleichen und gleichzeitig die winkelgetreue Übertragung gewährleisten.

Um die genaue Kupplung der Wellenenden und die winkelgetreue Übertragung sicherzustellen, müssen die Aufnahmebuchsen für die jeweiligen Wellenenden genau an den Wellendurchmesser angepaßt sein. Bei bisher bekannten Federscheibenkupplungen war es deshalb üblich, entsprechend der Vielzahl von Anwendungsfällen mit unterschiedlichen Wellendurchmessern auch eine Vielzahl von Stellringbuchsen oder Klemmbuchsen bereitzuhalten, um je nach Kundenwunsch das gewünschte Paar von Buchsen in einer Federscheibenkupplung zu montieren. Die dabei vielfach verwendeten geschlitzten Klemmbuchsen sind nicht nur in der Herstellung sehr aufwendig, sie erforderten auch eine kostspielige Lagerhaltung und für jede Kundenbestellung eine Präzisions-Einzelmontage, nämlich die

Pr 1 Fra / 27.2.1981

genaue und spannungsfreie Befestigung der beiden Klemmbuchsen an der jeweiligen Federscheibe.

Aufgabe der Erfindung ist es, eine Federscheibenkupplung
der eingangs erwähnten Art so zu gestalten, daß die Montage der Einzelteile vereinfacht wird und daß insbesondere die vorgefertigte Kupplung schnell und einfach an
jeden beliebigen Kundenwunsch angepaßt werden kann.

Erfindungsgemäß wird diese Aufgabe dadurch gelöst, daß
die beiden Stellringbuchsen eine einheitliche Größe mit
einem Innendurchmesser, der größer ist als der Durchmesser der größten anzukuppelnden Welle, besitzen und daß
in den Stellringbuchsen Einsatzbuchsen vorgesehen sind,
deren Außendurchmesser dem Innendurchmesser der Stellringbuchsen und deren Innendurchmesser dem Durchmesser
der jeweils anzukuppelnden Welle angepaßt ist, wobei
die Einsatzbuchsen mittels radial in den Stellringbuchsen geführter Druckschrauben auf der jeweiligen Welle
festklemmbar sind.

Bei der erfindungsgemäßen Konstruktion sind also anstelle
der früheren geschlitzten Stellringbuchsen, welche einerseits eine Anpassung ihres Innendurchmessers an die jeweilige Welle und andererseits eine genaue Ausrichtung
und Befestigung an der Federscheibe erforderten, nunmehr
jeweils zwei ineinanderliegende Buchsen vorgesehen. Die
Stellringbuchse hat eine einheitliche Größe und ist von
vorneherein fest mit der Federscheibe verbunden; damit
kann also der Grundaufbau einheitlich bei allen Kupplungen montiert werden. Zum Ausgleich zwischen diesem einheitlichen Grundaufbau und dem unterschiedlichen Wellendurchmesser nach dem Kundenwunsch ist in jeder Stellringbuchse eine zusätzliche Einsatzbuchse vorgesehen, welche
in einfachster Weise hergestellt und in die Öffnung der
Stellringbuchse eingesteckt werden kann. Diese billigen Einsatzbuchsen können sogar satzweise mit der Kupplung mitgeliefert und vom Kunden selbst eingesteckt werden. Ihre Befestigung erfolgt durch die radial in Gewindelöchern der Stellringbuchsen geführten Druckschrauben, welche die Einsatzbuchse leicht deformieren, sie auf diese Weise auf der betreffenden Welle festklemmen und eine feste Verbindung zwischen Welle und Kupplung herstellen.

Die Einsatzbuchsen können geschlitzt sein. Zweckmäßiger ist es jedoch, sie ohne Schlitz als geschlossene Ringe auszubilden; sie können dann kostengünstig durch Drehen gefertigt werden und ergeben eine exaktere Passung. Dabei müssen diese Einsatzbuchsen natürlich so gestaltet sein, daß sie durch die angreifenden Druckschrauben leicht deformiert und auf der innenliegenden Welle festgeklemmt werden können. Diese Deformierbarkeit hängt natürlich einerseits vom verwendeten Material, aber auch von der Wandstärke der Einsatzbuchse ab. Ist eine Welle mit geringem Querschnitt anzukuppeln, so ergibt sich eine große Differenz zwischen Außen- und Innendurchmesser der Einsatzbuchse. In diesem Fall ist es besonders zweckmäßig, in der Einsatzbuchse eine außen umlaufende Nut vorzusehen, so daß die Buchse einen U-förmigen Querschnitt erhält. In dieser Nut können dann die Druckschrauben angreifen und die in der Mitte verbleibende dünne Buchsenwand deformieren. Die umlaufende Nut in der Einsatzbuchse hat aber auch allgemein den Vorteil, daß die Einsatzbuchse durch die Druckschrauben formschlüssig in ihrer Lage fixiert und gegen Axialverschiebungen gesichert wird und somit unverlierbar ist. Zweckmäßig ist dabei auch eine beiderseitige Facette auf dem Grund der Nut, um auch bei geringer Einstichtiefe eine genaue Zentrierung durch die Druckschrauben zu ermöglichen.

Von Vorteil ist es weiterhin, wenn die Einsatzbuchsen aus einem weicheren Material als die üblicherweise anzukuppelnden Wellen bestehen, um die Wellen nicht zu beschädigen. Da diese Wellen meist aus Stahl gefertigt werden, bieten sich für die Einsatzbuchsen Materialien wie Aluminium, Kupfer und deren Legierungen sowie Stahl geringerer Härte an. Für elektrisch zu isolierende Übertragungen, beispielsweise bei Drehkondensatoren, können bei dieser Kupplungskonstruktion die Einsatzbuchsen ohne weiteres aus Isolierstoff mit genügender Elastizität und Druckfestigkeit sowie geringem Kaltfluß und geringer Spannungsrißanfälligkeit, wie z.B. Hartgewebe, PMMA, POM, PES, PBTP oder ähnliche, ausgeführt sein.

Die Stellringbuchsen sind, wie erwähnt, fest mit ihrer jeweiligen Federscheibe verbunden. Sie können in ihrer äußeren Gestalt rund oder auch eckig ausgeführt sein. Besonders zweckmäßig ist eine dreieckige Ausführungsform, wobei die Gewindebohrungen für die Druckschrauben jeweils von einer Ecke radial nach innen verlaufen. Dies hat den Vorteil, daß für die Druckschrauben ein langes Gewinde zur Verfügung steht, folglich hohe Schrauben-Anzugs- und Übertragungsmomente erreicht werden. Gleichzeitig ist eine solche Stellringbuchse leicht und raumsparend, und sie kann aufgrund ihrer Dreiecksform bei der Montage an der Federscheibe leicht ausgerichtet werden.

In weiterer Ausgestaltung der erfindungsgemäßen Federscheibenkupplung sind die beiden Stellringbuchsen zwischen zwei Federscheiben angeordnet und mit deren äußeren Stirnseiten an diesen Federscheiben befestigt, wobei diese Anordnung aus Stellringbuchsen und Federscheiben zwischen zwei stabilen Käfigringen angeordnet ist, welche ihrerseits im Durchmesser mindestens der Größe der Federscheiben entsprechen und über mindestens drei Abstandshalter starr miteinander verbunden sind. Damit ist eine einfache Montage der gesamten Kupplung gewährleistet; außerdem werden durch diese Anordnung die Federscheiben durch die außen liegenden Käfigringe geschützt und die Verletzungsgefahr bei Montage weitgehend ausgeschaltet.

Die Erfindung wird nachfolgend an einem Ausführungsbeispiel anhand der Zeichnung näher erläutert. Es zeigen
Fig. 1 und 2 die erfindungsgemäße Federscheibenkupplung in zwei Ansichten,
Fig. 3 und 4 eine Stellringbuchse aus Fig. 1 in zwei Ansichten,
Fig. 5 eine Einsatzbuchse aus Fig. 1 im Schnitt.

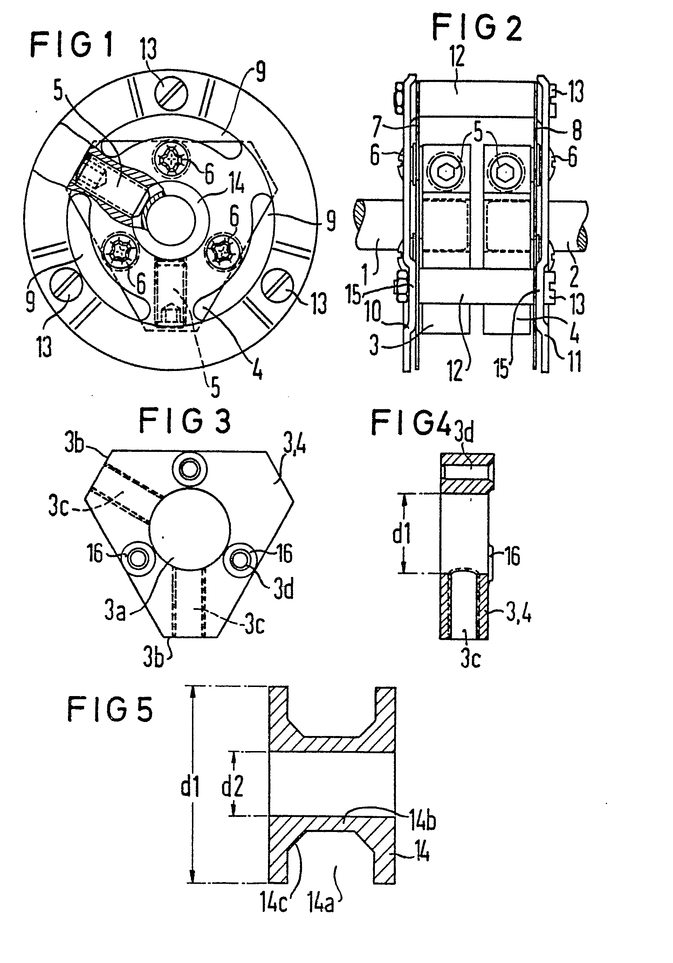

Die in den Fig. 1 und 2 dargestellte Federscheibenkupplung dient zur Verbindung zweier Wellenenden, nämlich der in Fig. 2 dargestellten Antriebswelle 1 und einer Abtriebswelle 2. Zur Ankupplung dienen dabei zwei dreieckförmige Stellringbuchsen 3 und 4, welche jeweils mittels Druckschrauben 5 über Einsatzbuchsen 14 eine kraftschlüssige Verbindung mit der jeweiligen Welle erhalten, also die Stellringbuchse 3 mit der Antriebswelle 1 und die Stellringbuchse 4 mit der Abtriebswelle 2. Die Stellringbuchse 3 ist über Schrauben 6 mit einer Federscheibe 7, die Stellringbuchse 4 mit einer Federscheibe 8 verbunden. Diese Federscheiben 7 und 8 besitzen in üblicher Weise Ausnehmungen 9 (siehe Fig. 1), um durch eine weiche Federcharakteristik einen etwaigen Versatz der Wellen 1 und 2 ausgleichen zu können und damit die hierdurch entstehenden erhöhten Lagerbelastungen nicht zu Funktionssstörungen bei empfindlichen Geräten (z.B. Drehmeldern) führen können. Trotzdem werden über diese Federscheiben alle Drehbewegungen winkelgetreu übertragen.

Die Federscheibenkupplung besitzt außerdem einen stabilen Käfig mit zwei Käfigringen 10 und 11, welche jeweils stirnseitig vor den Federscheiben angeordnet sind. Dabei besitzen die Käfigringe, anstelle der bisher üblichen zwischen Federscheibe und Käfigring montierten Unterlegscheiben, Prägungen 15, um die Bewegungsfreiheit und Elastizität der Federscheiben zu gewährleisten. Diese Käfigringe sind über Abstandshülsen 12 und Schrauben 13 zu einem stabilen Käfig verbunden. Durch den etwas größeren Durchmesser der Käfigringe 10 und 11 werden die dahinter liegenden Federscheiben 7 und 8 gegen Beschädigungen geschützt; auch die Verletzungsgefahr durch die dünnwandigen Federscheiben wird dadurch bei der Montage oder auch bei der sonstigen Handhabung weitgehend ausgeschlossen.

Die Stellringbuchsen 3 und 4 besitzen eine dreieckförmige Gestalt mit abgeschnittenen Ecken, wie aus Fig. 1 hervorgeht. In den Fig. 3 und 4 ist eine solche Stellringbuchse in Vorderansicht bzw. im Schnitt dargestellt. Die Stellringbuchsen 3 und 4 besitzen eine zentrale Bohrung 3a mit dem jeweils gleichen Durchmesser d1. Von zweien der abgestumpften Ecken 3b führt jeweils eine Gewindebohrung 3c in radialer Richtung bis zur zentralen Bohrung 3a zur Aufnahme der Druckschrauben 5. Durch die Dreiecksform der Stellringbuchse ist sichergestellt, daß die Druckschrauben 5 eine lange Gewindebohrung erhalten, daß aber gleichzeitig die Stellringbuchse möglichst wenig Masse und Platz beansprucht und so auch leicht zwischen den Abstandshülsen 12 des Käfigs gut montiert und zentriert werden kann (siehe Fig. 1). Zur Befestigung der Stellringbuchsen 3 bzw. 4 an ihren jeweiligen Federscheiben 7 bzw. 8 sind achsparallele Bohrungen 3d vorgesehen. Sie besitzen in ähnlicher Weise und Absicht angeformte Augen 16, um den Federscheiben die nötige Bewegungsfreiheit zu gewähren.

Die Druckschrauben 5 in den Stellringbuchsen 3 bzw. 4 wirken jeweils auf eine Einsatzbuchse, die paßgenau in die zentrale Bohrung 3a der Stellringbuchse eingesetzt wird. In Fig. 5 ist eine solche Einsatzbuchse vergrößert im Schnitt dargestellt. Der äußere Durchmesser d1 entspricht paßgenau dem Durchmesser d1 der Bohrung 3a. Dagegen entspricht der innere Durchmesser d2 der Einsatzbuchse 14 jeweils dem Durchmesser der anzukuppelnden Welle 1 bzw. 2. Je nach Stärke der Wellen 1 und 2 sind also unterschiedliche Einsatzbuchsen 14 in die Stellringbuchsen 3 bzw. 4 einzusetzen.

Die Einsatzbuchse 14 besitzt aufgrund einer umlaufenden Nut 14a ein U-förmiges Profil. In diese umlaufende Nut greifen die Druckschrauben 5 der Stellringbuchse 3 bzw. 4 ein und drücken beim Festklemmen auf die verbleibende dünne Wand 14b, welche nur geringfügig deformiert wird und eine kraftschlüssige Verbindung mit der innenliegenden Welle 1 bzw. 2 erhält. Wegen der nur geringfügigen Deformation sind die Einsatzbuchsen wieder leicht zu lösen und mehrmals verwendbar. Durch Facetten 14c wird die Einsatzbuchse 14 in Axialrichtung an den Druckschrauben 5 ausgerichtet und innerhalb der Stellringbuchse 3 bzw. 4 positioniert und gehalten. Verwendet man für die Einsatzbuchsen ein relativ weiches Material, wie Aluminium, so läßt sich mit der erfindungsgemäßen Kupplung eine gute Verbindung mit den jeweiligen Wellen herstellen, ohne daß die Wellenoberfläche durch Druckstellen beschädigt würde. Die Buchsenwandung 14b wird dabei zweckmäßigerweise so gewählt, daß aufgrund der Elastizität die Schraubenandruckkräfte der Druckschrauben 5 größtmöglich übertragen werden können.

Damit eine einfache Kennung der z.T. nur geringfügig unterschiedlichen Paßbohrungen der Einsatzbuchsen erzielt wird und somit Verwechslungen ausgeschaltet werden, sind die Einsatzbuchsen verschieden gefärbt oder mechanisch
gekennzeichnet (Kerben).

10 Patentansprüche
 5 Figuren

Patentansprüche

1. Federscheibenkupplung zur Verbindung zweier Wellenenden für winkelgetreue Übertragung von Drehbewegungen, mit zwei in einem stabilisierenden Käfig gehaltenen Federscheiben, wobei zwei Stellringbuchsen zur Aufnahme je eines Wellenendes an der bzw. an je einer Federscheibe befestigt sind, d a d u r c h   g e k e n n z e i c h - n e t ,   daß die beiden Stellringbuchsen (3, 4) eine einheitliche Größe mit einem Innendurchmesser ($d1$), der größer ist als der Durchmesser ($d2$) der größten anzukuppelnden Welle (1, 2), besitzen und daß in den Stellringbuchsen (3, 4) Einsatzbuchsen (14) vorgesehen sind, deren Außendurchmesser ($d1$) dem Innendurchmesser ($d1$) der Stellringbuchsen (3, 4) und deren Innendurchmesser ($d2$) dem Durchmesser der anzukuppelnden Welle (1, 2) angepaßt ist, wobei die Einsatzbuchsen (14) mittels radial in den Stellringbuchsen (3, 4) geführter Druckschrauben (5) auf der jeweiligen Welle (1, 2) festklemmbar sind.

2. Federscheibenkupplung nach Anspruch 1, d a d u r c h   g e k e n n z e i c h n e t ,   daß die Einsatzbuchsen (14) als geschlossene Ringe mit zumindest im Bereich der Druckschrauben (5) deformierbarer Wand (14b) ausgebildet sind.

3. Federscheibenkupplung nach Anspruch 1 oder 2, d a - d u r c h   g e k e n n z e i c h n e t ,   daß die Einsatzbuchsen (14) mit einer umlaufenden Nut (14a) versehen sind und daß die Druckschrauben (5) im Bereich der Nut (14a) eingreifen.

4. Federscheibenkupplung nach Anspruch 3, d a d u r c h   g e k e n n z e i c h n e t ,   daß die Einsatzbuchsen (14) in der umlaufenden Nut (14a) Facetten (14c) zur Ausrichtung der Druckschrauben (5) in Axialrichtung aufweisen.

5. Federscheibenkupplung nach einem der Ansprüche 1 bis 4, d a d u r c h   g e k e n n z e i c h n e t ,   daß die Einsatzbuchsen (14) aus einem Material bestehen, das weicher ist als das üblicherweise für die anzukuppelnden Wellen (1, 2) verwendete Material.

6. Federscheibenkupplung nach Anspruch 5, d a d u r c h   g e k e n n z e i c h n e t ,   daß zumindest eine der Einsatzbuchsen (14) aus Isolierstoff bestehen.

7. Federscheibenkupplung nach einem der Ansprüche 1 bis 6, d a d u r c h   g e k e n n z e i c h n e t ,   daß die Stellringbuchsen (3, 4) eine dreieckförmige äußere Form besitzen, wobei die Gewindebohrungen (3c) für die Druckschrauben (5) jeweils von einer abgestumpften Ecke (3b) radial nach innen verlaufen.

8. Federscheibenkupplung nach einem der Ansprüche 1 bis 7, d a d u r c h   g e k e n n z e i c h n e t ,   daß die beiden Stellringbuchsen (3, 4) zwischen zwei Federscheiben (7, 8) angeordnet und mit ihren äußeren Stirnseiten an den Federscheiben befestigt sind und daß die Anordnung aus Federscheiben (7, 8) und Stellringbuchsen (3, 4) zwischen zwei über Abstandshülsen (12) miteinander verbundenen Käfigringen (10, 11) angeordnet sind, wobei die Käfigringe jeweils einen größeren Durchmesser als die Federscheiben besitzen.

9. Federscheibenkupplung nach Anspruch 8, d a d u r c h   g e k e n n z e i c h n e t ,   daß an den Käfigringen (10, 11) Prägungen (15) als Abstandshalter zu den Federscheiben (7, 8) vorgesehen sind.

10. Federscheibenkupplung nach einem der Ansprüche 1 bis 9, d a d u r c h   g e k e n n z e i c h n e t ,   daß an

0059253

- 10 -    VPA 81 P 6844 E

den Stellringbuchsen (3, 4) im Bereich der Verbindungsstellen mit den Federscheiben (7, 8) jeweils augenförmige Erhebungen (16) angeformt sind.

0059253

1/1

FIG 1

FIG 2

FIG 3

FIG4

FIG 5

**0059253**

Nummer der Anmeldung

EP 81 10 9144

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR - A - 1 021 778 (H.C.P.) | | |
| A | FR - A - 1 361 493 (HISPANO) | | F 16 D 3/79 |
| A | US - A - 2 182 711 (THOMAS) | | |
| A | US - A - 3 233 428 (CHALPIN) | | |
| A | US - A - 3 662 570 (CHINLUND) | | |
| A,P | GB - A - 2 060 135 (SCHMIDT) | | |

---------------

| | | | RECHERCHIERTE SACHGEBIETE (Int. Cl. ³) |
|---|---|---|---|
| | | | F 16 D |

Der vorliegende Recherchenbericht wurde für alle Patentansprüche erstellt.

| Recherchenort | Abschlußdatum der Recherche | Prüfer |
|---|---|---|
| Den Haag | 09-06-1982 | ORTHLIEB |